# EUROPÄISCHE PATENTSCHRIFT

(11) **EP 0 412 182 B1**
(45) Veröffentlichungstag und Bekanntmachung des Hinweises auf die Patenterteilung: **02.06.1993**
(21) Anmeldenummer: 89114595.5
(22) Anmeldetag: 08.08.1989
(51) Int. Cl.: C04B 18/26

(54) **Bauteile, insbesondere Platten aus Gips**
Building elements, in particular gypsum boards
Eléments de construction, en particulier des panneaux de plâtre

(43) Veröffentlichungstag der Anmeldung: 13.02.1991
(73) Patentinhaber: Rigips GmbH, D-37619 Bodenwerder (DE)
(72) Erfinder: Rennen, Heinz, Dr., D-3452 Bodenwerder (DE); Hielscher, Gerald, Chemie-Ing., D-3280 Bad Pyrmont (DE)
(74) Vertreter: Minderop, Ralph H., Dr. rer. nat.

(56) Entgegenhaltungen:
- EP-A- 0 236 758
- DE-A- 3 604 099
- US-A- 3 164 511
- CHEMICAL ABSTRACTS, Band 105, Nr. 2, Juli 1986, Seite 301, Zusammenfassung Nr. 11097z, Columbus, Ohio, US; & JP-A-60 246 248 (ASAHI CHEMICAL INDUSTRY CO., LTD) 05-12-1985
- CHEMICAL ABSTRACTS, Band 94, 1981, Seite 295, Zusammenfassung Nr. 51874m, Columbus, Ohio, US; & PI-A-78 04 705 (L.R.F. FURTADO) 29-04-1980
- CHEMICAL ABSTRACTS, Band 106, Nr. 14, April 1987, Seite 315, Zusammenfassung Nr. 107059k, Columbus, Ohio, US; & JP-A-61 215 242 (H. YAKUSHIJI) 25-09-1986

## Beschreibung

Bauteile, insbesondere Platten aus Gips, sind in den verschiedensten Ausfertigungen zur Verwendung beispielsweise im Hochbau d. h. bei Häusern ein nicht mehr wegzudenkender Werkstoff.

Diese Platten werden u. a. mit Kartonummantelung als sogenannte Gipskartonplatten in verschiedenen Stärken und Abmessungen eingesetzt. Sie dienen als Trockenputz, zum Feuerschutz, als Träger von Dämmstoffen gegen Wärme und Schall und sind aufgrund ihrer physikalischen und chemischen Eigenschaften besonders wertvolle Bauteile.

Diese Gipskartonplatten werden mit verschiedenen Zusätzen und in verschiedener Dichte je nach Verwendungszweck hergestellt (Hanus, "Gipskartonplatten", 1. Auflage, 1978).

Es ist ferner bekannt, Gipsplatten mit verschiedenen Zusätzen herzustellen. Insbesondere hat man versucht, die mechanischen Festigkeiten dadurch zu verbessern, daß man faserförmiges Material, sei es aus organischen, sei es aus anorganischen Stoffen zugesetzt hat (DE-OS 15 71 466).

Als Zusätze zu dem die Platte überwiegend bildenden Calciumsulfathalbhydrat werden beispielsweise außer Ton, Rohgips und Kunstharzpulvern, Fasern und Späne aller Art vorgeschlagen. Die Vorstellung, Späne in die Gipsplatten einzuarbeiten, findet ihren Ausdruck auch in einer deutschen Patentanmeldung nämlich DE-AS 29 19 311, in welcher vorgeschlagen wird, diese Späne mit Wasser zu tränken, so daß das zur Hydratation des Halbhydratgipses erforderliche Anmachwasser auf diese Weise dem Gemenge zugeführt wird, so daß möglichst wenig überschüssiges Wasser vorhanden ist, das, wie bekannt und in jedem Falle lästig, aber notwendig, durch Trocknen entfernt werden muß.

Während in der erstgenannten DE-OS 15 71 466 ganz pauschal von Spänen die Rede ist, ohne anzugeben, welcher Art die Späne sein sollen, ist in der letztgenannten DE-AS 29 19 311 die Beimischung von Holzspänen nur noch ein Hilfsmittel, mit dem man das zum Abbinden erforderliche Wasser in das Halbhydratgemenge eintragen will. Auch hier ist von Spänen nicht die Rede hinsichtlich ihrer Natur, ihrer Art, insbesondere ihrer Gestalt und Abmessungen und dergleichen mehr.

Die Gipskartonplatte, die Gipsvliesplatte oder die Gipsplatte sind ausgezeichnete Bauteile mit einer praktisch universellen Verwendung im Innenausbau.

Ein Problem ist die Erreichung einer ausreichenden Schrauben- bzw. Nagelauszugsfestigkeit, was trotz der Hinweise, die in der oben aufgeführten Literatur aufgezählt sind, bisher nicht in jedem Falle erreichbar war. Der Hinweis, dem Gips bzw. dem Gipsbrei Spane zuzumischen, läßt den Fachmann noch mit vielen Fragen allein. Die DE-OS 15 71 466 redet lediglich von Spänen schlechthin. Es ist weder angegeben, aus welchen Stoffen diese Späne sein sollen, welche Abmessungen noch welche Form sie haben sollen. Praktisch das gleiche gilt für die DE-AS 29 19 311, und wenn man letztere Schrift ausführlich studiert, so tritt das Problem der Spane wieder völlig in den Hintergrund, denn sie sind hier zwar etwas deutlicher Erwähnt, indem man das Material nennt, aus dem sie bestehen sollen, nämlich aus Holz, aber sie spielen nicht mehr die Rolle der Verbesserung der mechanischen Eigenschaften der Platte, sondern sie treten nur noch als Wasserträger für das abzubindende Halbhydrat in Funktion. Das dürfte sicher auch ein Grund sein, weshalb sich diese Informationen, die mehr als 20 Jahre zurückliegen, bisher in der Praxis nicht durchgesetzt haben.

Aus der DE-OS 36 08 587 ist eine Bauplatte bekannt, deren Gipskern zwei Sorten Holzspäne enthält, nämlich Grobspäne und Feinspäne, die dazu noch in bestimmter Weise gefertigt sind. Es hat sich gezeigt, daß ein derartiges Holzspangemisch zwar eine verbesserte Schrauben- und Nagelfestigkeit erbringt, aber die homogene Vermischung dieser Holzspäne, insbesondere der groben Späne mit dem Gips ist schwierig. In der DE-OS 36 04 099 wird die Verwendung von Hartholzspänen, insbesondere Eichenholzspanen mit Gips beschrieben. Man verspricht sich davon eine besondere Festigkeit und Härte der Gipskartonplatte.

Aus der EU-PS 19 207 ist ein Verfahren zur Herstellung von Gipsbauteilen, insbesondere Gipsbauplatten bekannt, welches das Problem der Verringerung der Anmachwassermenge dadurch zu lösen versucht, daß poröse Teilchen mit Wasser getränkt dem Gemisch zugesetzt werden. Als poröse Teilchen werden vorgeschlagen:
Gasbeton, Blähton, Holzfasergranulat oder ähnliches.

Da es hierbei auf die Holzspäne als Konstruktionselement der Platte oder des Bauteiles nicht ankommt, sondern diese nur aus Wasserdepots verwendet werden, ist über die Form, Art und Herstellungsweise der Späne bzw. des Holzfasergranulats, nichts ausgesagt.

Demgegenüber ist es Aufgabe der vorliegenden Erfindung, ein Bauteil, z. B. eine Bauplatte, zu erzeugen, zu deren physikalische Eigenschaften wie Festigkeit, Bearbeitbarkeit, Nagel- und Schraubbarkeit die Holzteilchen einen wesentlich vorteilhaften Beitrag leisten und wobei die Holzteilchen so beschaffen und hergestellt sind, daß sie sich in optimaler Weise mit dem Halbhydratbrei zu einer homogeneren Masse vermischen lassen.

Gelöst wird diese Aufgabe bei Bauteilen, insbesondere Platten aus Gips und weiteren bekannten Zuschlag- oder Zusatzstoffen sowie mit einem Gehalt an Holz in Form eines Gemisches plättchenförmiger Holzteilchen in Mengen von 5 - 15 Gew.% und in einer Holzteilchenlänge von 0 - 5 mm dadurch, daß das Holzteilchengemisch sich zusammensetzt aus 20 Gew.% mit einer Länge von 0 - 0,2 mm, 70 Gew.% mit einer Länge von 0,2 - 2 mm und einem Rest von 10 % mit einer Länge bis etwa 5 mm.

In Verfolg des Erfindungsgedanken haben die Plättchen möglichst plane Gestalt und quadratische bis rechteckige Form. Bei rechteckiger Form der Plättchen bezieht sich die Längenabmessung auf die Entfernung zwischen den Enden der langen Seiten.

Die Plättchen bestehen aus Weichholz, insbesondere aus Fichtenholz, und sind vorzugsweise durch eine solche Vorrichtung erzeugt, die verhindert, daß sich die Plättchen kräuseln oder werfen, wie das bei Hobelspänen der Fall ist. Es hat sich gezeigt, daß es von erfinderischer Bedeutung ist, daß die Holzplättchen plan sind. Nur so ist eine möglichst optimale Verteilung in dem Gipsbrei möglich.

Die Verarbeitung dieses Holzplättchengemisches geschieht dadurch, daß die Plättchen während der Herstellung, aber auch nach der Herstellung des Gipsbreies, zugemischt werden.

Die Holzteilchen können sowohl trocken als auch feucht zugemischt werden. Sie können oberflächlich behandelt sein, z. B. mineralisiert.

Ein mit einem solchen Holzteilchengemisch in einer Menge von 10 Gew.% hergestelltes Bauteil, z. B. eine Gipskartonplatte, ist ohne Schwierigkeiten herstellbar, d.h. das Holzteilchengemisch läßt sich wie ein üblicher Zuschlagstoff leicht und problemlos zudosieren und mischen.

Die hergestellte Platte hat ausgezeichnete Festigkeitswerte, die einer Gipskartonplatte entsprechen, aber erheblich größere Festigkeitswerte hinsichtlich der Kraft, die aufzuwenden ist, um Schrauben oder Nägel, die in die erfindungsgemäße Platte eingeschlagen oder eingeschraubt sind, wieder herauszuziehen.

Dieser Umstand ist für die Verarbeitung der Platten besonders vorteilhaft.

Die Dicke und Breite der Späne ist nicht kritisch, kann in größeren Bereichen variieren,solange noch das Kriterium eines Plättchens vorhanden ist.

## Patentansprüche

1. Bauteile, insbesondere Platten aus Gips und weiteren bekannten Zuschlag- oder Zusatzstoffen sowie mit einem Gehalt an Holz in Form eines Gemisches plättchenförmiger Holzteilchen in Mengen von 5 - 15 Gew.% und in einer Holzteilchenlänge von 0 - 5 mm, **dadurch gekennzeichnet,** daß das Holzteilchengemisch zusammengesetzt ist aus 20 Gew.% mit einer Länge von 0 - 0,2 mm, 70 Gew.% mit einer Länge von 0,2 - 2 mm und einem Rest von 10 % mit einer Länge bis etwa 5 mm.

2. Bauteile nach Anspruch 1, **dadurch gekennzeichnet,** daß die plättchenförmigen Holzteilchen plane Gestalt haben.

3. Bauteile nach Anspruch 1 und 2, **dadurch gekennzeichnet,** daß die Plättchen aus Weichholz bestehen, vorzugsweise Fichtenholz und vorzugsweise durch eine solche Vorrichtung erzeugt, die verhindert, daß sich die Plättchen kräuseln oder werfen.

4. Bauteile nach Anspruch 1 bis 3, **dadurch gekennzeichnet,** daß das Holzplättchengemisch vorher erzeugt ist und feucht oder trocken dem Gipsbrei zugesetzt wird.

5. Bauteile nach Anspruch 1 bis 4, **dadurch gekennzeichnet,** daß die Holzplättchen oberflächlich mit einem Mineralisierungsmittel behandelt sind oder getrocknet und mit einem Hydrophobierungsmittel beschichtet oder mit einer wässrigen Kunststoffdispersion und/oder mit einem Tensid beschichtet sind.

## Claims

1. Building elements, in particular boards of gypsum and other known aggregates and admixtures and also having a content of wood in the form of a mixture of platelet-shaped wood particles in quantities of 5-15% by wt. and with a wood particle length of 0-5 mm, characterized in that the wood particle mixture is composed of 20% by wt. having a length of 0-0.2 mm, 70% by wt. having a length of 0.2-2 mm and a remainder of 10% having a length of up to about 5 mm.

2. Building elements according to Claim 1, characterized in that the platelet-shaped wood particles have a flat form.

3. Building elements according to Claims 1 and 2, characterized in that the platelets are of softwood, preferably of spruce and are preferably produced by a device of a type which prevents the platelets from curling or warping.

4. Building elements according to Claims 1 to 3, characterized in that the wood platelets mixture is previously produced and is added moist or dry to the gypsum paste.

5. Building elements according to Claims 1 to 4, characterized in that the wood platelets are surface-treated with a mineralizing agent or dried and are coated with a water repellent agent or with an aqueous plastics dispersion and/or with a tenside.

## Revendications

1. Eléments de construction, en particulier, panneaux de plâtre et de matière d'apport et d'addition supplémentaires connues, contenant du bois sous la forme d'un mélange de particules de bois se présentant en plaquettes en des quantités de 5-15 % en poids et en une longueur de particule de 0 - 5 mm, caractérisés en ce que le mélange de particules de bois se compose de 20 % en poids de particules d'une longueur de 0-0,2 mm, de 70 % en poids d'une longueur de 0,2 - 2 mm, les 10 % restants étant d'une longueur allant jusqu'à environ 5 mm.

2. Eléments de construction selon la revendication 1, caractérisé en ce que les particules de bois sous forme de plaquettes sont planes.

3. Eléments de construction suivant les revendications 1 et 2, caractérisés en ce que les plaquettes sont faites de bois tendre, de préférence de bois d'épicéa, et ont de préférence été produites au moyen d'un dispositif tel qu'il empêche qu'elles forment des boucles ou se déjettent.

4. Eléments de construction suivant les revendications 1 à 3, caractérisés en ce que le mélange de plaquettes de bois a été produit au préalable et est ajouté au plâtre à l'état humide ou à l'état sec.

5. Eléments de construction suivant les revendications 1 à 4, caractérisés en ce que les plaquettes de bois ont été traitées en surface au moyen d'un agent de minéralisation ou ont été séchées et revêtues d'un agent destiné à les rendre hydrophobes ou ont été revêtues d'une dispersion aqueuse de matière synthétique et/ou d'un agent tensio-actif.
